# EUROPÄISCHE PATENTSCHRIFT

(11) **EP 2 626 610 B1**
(45) Veröffentlichungstag und Bekanntmachung des Hinweises auf die Patenterteilung: **26.08.2015**
(21) Anmeldenummer: 12154895.2
(22) Anmeldetag: 10.02.2012
(51) Int. Cl.: F16L 21/08, F16L 37/091, F23J 13/04, F24F 13/02

(54) **Vorrichtung zum Verbinden von Rohrabschnitten**
Device for connecting tube sections
Dispositif destiné à la liaison de sections de tuyaux

(43) Veröffentlichungstag der Anmeldung: 14.08.2013
(73) Patentinhaber: eka edelstahlkamine gmbh, 95369 Untersteinach (DE)
(72) Erfinder: Böhm, Jürgen, 95369 Untersteinach (DE)
(74) Vertreter: Molnia, David

(56) Entgegenhaltungen:
- EP-A1- 1 039 202
- EP-A2- 1 176 354
- EP-A2- 1 531 208
- EP-A2- 2 282 101
- US-A- 4 600 223

## Beschreibung

Die Erfindung bezieht sich auf eine Vorrichtung zum Verbinden von Rohrabschnitten unter Einsatz eines Klemmbandes, zur Verwendung im industriellen sowie im häuslichen Bereich.

Auf dem Gebiet der Haustechnik sind insbesondere im Bereich der Abgasanlagen und der Lüftungs- und Klimatechnik Verbindungselemente für Rohrsysteme zur Zu- und / oder Ableitung von Gasen im Einsatz. Ebenso sind Verbindungselemente für Rohrsysteme im stationären Bereich, wie z.B. bei Blockheizkraftwerken, wo Abgase aus einem Motor abgeleitet werden, im Einsatz.

Insbesondere die Ableitung von aggressiven Gasen, wie z.B. Abgasen aus Verbrennungsanlagen, stellt hohe Anforderungen an die Dichtigkeit des Rohrsystems. Hinzu kommt, dass Rohrsysteme bei der Ableitung von Gasen in der Regel über die Dächer der entsprechenden Gebäude hinaus ragen und dadurch zusätzlichen statischen Kräften ausgesetzt sind. Dabei kann die Auskragung der Rohrsysteme in einer Größenordnung von zwei bis drei Metern liegen.

Typische Verbrennungsanlagen sind Wärmeerzeugungsanlagen und Motoren, wie sie zur Warmwasserbereitung, zu Heizzwecken, zur Stromerzeugung, zu Antriebszwecken, als s Blockheizkraftwerke oder ähnlichem im häuslichen sowie im industriellen Bereich zur Anwendung kommen.

Ein weiterer Einsatzbereich dieser Rohrsysteme ist die Zuleitung oder Ableitung von Gasen, z.B. von Frischluft oder Abluft. Solche Anlagen können in jedem Bereich zur Anwendung kommen, also insbesondere auch in der Klimatechnik, z.B. auch für Klimaanlagen im häuslichen und industriellen Bereich.

Verbindungselemente für Rohrsysteme eignen sich sowohl für den Neubau als auch die Sanierung und Reparatur von Altanlagen.

Ein aus der Haustechnik bekanntes Abgassystem ist zum Beispiel der EP 1 176 354 A2 zu entnehmen. Dabei handelt es sich um eine Rohrverbindung zum Verbinden von Rohrabschnitten. Die einzelnen Rohrabschnitte können sukzessive ineinander gesteckt werden, wobei ein Rohrabschnitt jeweils über ein männliches und ein weibliches Ende verfügt. Das männliche Ende wird in das weibliche Ende gesteckt, wobei der Zusammenhalt der beiden Enden über eine lösbare bajonettartige Verbindung realisiert wird.

Die oben beschrieben Rohrverbindung erfordert allerdings bei der Montage eine Rotationsbewegung der einzelnen Rohrabschnitte zum Schließen des bajonettartigen Verschlusses. In schwerzugänglichen Kaminschächten kann das Erfordernis einer Rotationsbewegung der Rohrabschnitte die Montage erschweren. Außerdem wirkt sich die Ausprägung eines bajonettartigen Verschlusses negativ auf die Herstellkosten der Rohrabschnitte aus.

Eine weitere Lösung zur Verbindung von Rohrabschnitten bietet der Einsatz von Klemmelementen, welche äußerlich auf die Verbindungsbereiche der Rohrabschnitte angebracht werden.

Die PCT-Anmeldung WO 2011/025935 A2 betrifft eine Rohrklemme, die unter anderem einen Spannmechanismus aufweist, welcher es ermöglicht Rohrabschnitte auf Stoß miteinander zu verbinden und abzudichten.

Gegenwärtig sind verschiedenen Rohrklemmen im Einsatz, wobei diese sich hauptsächlich in dem Prinzip der Erzeugung ihrer Spannkraft unterscheiden. Allerdings wirken solche Rohrklemmen und diesen ähnliche Elemente in erster Linie radial auf die Rohrverbindung. Eine axiale Sicherung können diese nur unzureichend erreichen. Dies kann sich insbesondere bei einer hohen statischen Belastung als nachteilig auswirken.

Weiterhin erfordert die Montage entsprechender Elemente zum einen Werkzeug, zum anderen auch den nötigen Freiraum, um die Elemente dauerhaft anbringen zu können. Dieser Umstand ist insbesondere bei Sanierungen nicht immer gegeben.

Beide Dokumente EP 2282101 A und EP 1531208 A offenbaren einen Rohrabschnitt gemäss dem Oberbegriff des Anspruchs 1.

Es ist folglich eine Aufgabe der Erfindung eine Rohrverbindung zur Verfügung zu stellen, welche das Verbinden von Rohrabschnitten unter geringem Freiraum für die Montage ermöglicht. Es ist weiterhin Aufgabe der Erfindung eine Rohrverbindung zur Verfügung zu stellen, welche eine werkzeugarme Montage ermöglicht. Es ist weiterhin Aufgabe der Erfindung eine Rohrverbindung zur Verfügung zu stellen, welche einen hohen Widerstand gegen statische Kräfte aufweist. Es ist weiterhin Aufgabe der Erfindung eine Rohrverbindung zur Verfügung zu stellen, welche geringere Herstellkosten aufweist.

Die Aufgabe wird durch einen Rohrabschnitt gemäß dem unabhängigen Anspruch 1.

Vorteilhafte Weiterbildungen sind den jeweiligen abhängigen Ansprüchen zu entnehmen.

Die Erfindung betrifft eine Verbindung von Rohrabschnitten, wobei ein Teil eines Rohrabschnitts in einen anderen Rohrabschnitt gesteckt wird und somit einen Verbindungsbereich bildet. Dabei befinden sich in dem Verbindungsbereich zwischen den ineinander gesteckten Rohrabschnitten ein oder mehrere Klemmelemente in einem dafür vorgesehenen Bereich. Im ineinander gesteckten Zustand werden die Klemmelemente teilweise gebogen und sorgen für eine erhöhte Reibung zwischen den ineinander gesteckten Rohren, wodurch eine kraftschlüssige Verbindung ermöglicht wird.

Erfindungsgemäß weist ein Rohrabschnitt an einem ersten Ende einen Einsteckteil zum Einstecken in einen Muffenteil an einem zweiten Ende eines anderen Rohrabschnitts auf. Der Außendurchmesser des Einsteckteils ist dabei kleiner als der Innendurchmesser des Muffenteils. Der Außendurchmesser des Einsteckteils kann dem Außendurchmesser des Rohres entsprechen, er kann aber auch kleiner oder sogar größer sein. Jeder Rohrabschnitt verfügt entsprechend über ein erstes und ein zweites Ende.

Dabei weist der Einsteckteil einen ersten Bereich mit einem gegenüber dem Einsteckteil reduzierten Durchmesser auf.

In dem ersten Bereich sitzt teilweise mindestens ein Klemmelement. Dabei erstreckt sich das Klemmelement aus dem ersten Bereich über einen Teil des Einsteckteils in Richtung des zweiten Endes des Rohrabschnitts.

Im eingesteckten Zustand befindet sich der Einsteckteil eines Rohrabschnitts innerhalb des Muffenteils eines anderen Rohrabschnitts. In diesem Zustand befindet sich die äußere Umfangsfläche des Einsteckteils des einen Rohrabschnitts im Wesentlichen in Kontakt mit der inneren Umfangsfläche des Muffenteils des anderen Rohrabschnitts. Zwischen der äußeren Umfangsfläche des ersten Bereichs und der inneren Umfangsfläche des Muffenteils besteht ein umlaufender Spalt, welcher teilweise durch einen Teil des mindestens einen Klemmelementes ausgefüllt ist. Der Teil des Klemmelementes, welcher sich über einen Teil des Einsteckteils in Richtung des zweiten Endes des Rohrabschnitts erstreckt, bildet mit seiner äußeren Oberfläche mit der inneren Umfangsfläche des Muffenteils des anderen Rohrabschnitts eine reibschlüssige Verbindung.

Die Länge des Einsteckteils ist dabei nicht vorgegeben. Zwar erhöht sich die Festigkeit der Verbindung mit dem Abstand des mindestens einen Klemmelements vom ersten Ende des Rohrabschnitts, allerdings werden mit der Länge des Verbindungsbereichs der Materialverbrauch und auch das Gewicht des Rohrsystems größer. Der Abstand des mindestens einen Klemmelements vom ersten Ende des Rohrabschnitts (und somit die Länge des Einsteckteils) kann daher an die vorliegenden Rahmenbedingungen abgepasst werden.

Je nachdem wie dick das Material des mindestens einen Klemmelementes ist, kann der Teil des Einsteckteils, über welchen sich ein Teil des Klemmelementes erstreckt, in einer bevorzugten Ausführungsform auch einen Zwischendurchmesser aufweisen, welcher zwischen dem Durchmesser des Einsteckteils und dem Durchmesser des zweiten Bereichs liegt. Auf diese Weise ist sichergestellt, dass auch bei größerer Dicke des mindestens einen Klemmelementes dieses zwischen der inneren Umfangsfläche des Muffenteils und der äußere Oberfläche des Einsteckteils angeordnet werden kann, um dort mit der inneren Umfangsfläche des Muffenteils eine reibschlüssige Verbindung einzugehen.

In einer bevorzugten Ausführungsform wird der erste Bereich mit reduziertem Durchmesser von zwei Schultern begrenzt, die den Übergang von dem Durchmesser des ersten Bereichs zu dem Durchmesser des Einsteckteils darstellen. Dabei handelt es sich bei der Schulter, welche ausgehend von dem ersten Bereich auf der Seite des ersten Endes des Rohrabschnitts liegt, um eine äußere Schulter und bei der Schulter, welche ausgehend von dem ersten Bereich auf der Seite des zweiten Endes des Rohrabschnitts liegt, um eine innere Schulter.

Das mindestens eine Klemmelement stützt sich in einer bevorzugten Ausführungsform dabei in dem ersten Bereich über die äußere Schulter ab. Der Kraftfluss verläuft dabei von der äußeren Schulter in dem ersten Bereich des Einsteckteils über das Klemmelement, welches sich von der äußeren Schulter über den ersten Bereich und weiter über die innere Schulter in den Teil zwischen Muffenteil und Einsteckteil erstreckt, und mündet in einer reibschlüssigen Verbindung zwischen Klemmelement und der inneren Umfangsfläche des Muffenteils.

In einer bevorzugten Ausführungsform verläuft das Klemmelement zumindest teilweise unter einem definierten Winkel zur Wand des Rohrabschnitts. Dabei bildet das mindestens eine Klemmelement mit der äußeren Umfangsfläche des ersten Bereichs einen spitzen Winkel, indem es sich von der äußeren Umfangsfläche des ersten Bereichs über die innere Schulter in Richtung des zweiten Endes des Rohrabschnitts erstreckt.

In einer bevorzugten Ausführungsform ist das mindestens eine Klemmelement mit einem Band verbunden, welches auf der äußeren Umfangsfläche des ersten Bereichs angeordnet ist. Dabei wird das mindestens eine Klemmelement durch das Band in Position gehalten.

In einer bevorzugten Ausführungsform sind das Band und das mindestens eine Klemmelement aus einem Stück gefertigt.

In einer bevorzugten Ausführungsform ist das Band frei beweglich auf der äußeren Umfangsfläche des zweiten Bereichs angeordnet. Dabei weist diese Anordnung im ineinander gesteckten Zustand eine reibschlüssige Verbindung zwischen der inneren Oberfläche des Bandes und der äußeren Umfangsfläche des ersten Bereichs auf. Je nach Verhältnis von Innendurchmesser des Bandes zum Außendurchmesser des ersten Bereichs des Einsteckteils kann es dann sein, dass diese nicht mehr oder zumindest nicht mehr über den vollen Umfang in Kontakt stehen. Einem Auseinanderziehen der beiden Rohrabschnitte wirkt dann entgegen, dass das Band sich dabei an einer äußeren Schulter des ersten Bereichs abstützt.

In einer bevorzugten Ausführungsform ist das Band mit dem ersten Bereich fest (d.h. nicht lösbar) verbunden, beispielsweise aufgeklebt, genietet oder geschweißt.

In einer weiteren bevorzugten Ausführungsform ist das mindestens eine Klemmelement mit dem ersten Bereich fest (d.h. nicht lösbar) verbunden, beispielsweise aufgeklebt, genietet oder geschweißt.

In einer bevorzugten Ausführungsform ist das mindestens eine Klemmelement mit einem Band in Form einer Schelle verbunden, welche auf der äußeren Umfangsfläche des ersten Bereichs angeordnet ist. Dabei kann die Schelle über eine Stellschraube festgezogen werden. Diese ist beispielsweise so angebracht, dass durch Drehen der Stellschraube, welche mit Schrägrippen auf der Außenseite der Schelle in Verbindung steht, der Durchmesser der Schelle verstellt werden kann. Dadurch kann der Klemmdruck, den die Klemmelemente gegen die Innenwand des Muffenteils ausüben, eingestellt werden.

Durch eine entsprechende Aussparung im Muffenteil ist die Schraube auch im ineinander gesteckten Zustand der beiden Rohrabschnitte zugänglich. Auf diese Weise kann die Schraube vor dem Zusammenstecken der beiden Rohrabschnitte zunächst so eingestellt werden, dass der Klemmdruck der Klemmelemente gegen die Innenwand des Muffenteils gering ist. Im eingesteckten Zustand kann die Schraube dann so eingestellt werden, dass der Klemmdruck und somit die Klemmwirkung zwischen dem mindestens einen Klemmelement und dem Muffenteil erhöht wird.

Beispielsweise kann durch Drehen der Stellschraube der Durchmesser der Schelle vergrößert werden, sodass die Klemmelemente stärker gegen die Innenwand des Muffenteils gedrückt werden. Je nach Verhältnis von Innendurchmesser der Schelle zum Außendurchmesser des ersten Bereichs des Einsteckteils kann es dann sein, dass diese nicht mehr oder zumindest nicht mehr über den vollen Umfang in Kontakt stehen. Einem Auseinanderziehen der beiden Rohrabschnitte wirkt dann entgegen, dass die Schelle sich dabei an einer äußeren Schulter des ersten Bereichs abstützt.

Die Erfindung bezieht sich auch auf eine Vorrichtung zum Verbinden von Rohrabschnitten. Eine erfindungsgemäße Vorrichtung weist ein Band auf, das eine Länge, welche eine Längsrichtung definiert, und eine Breite, welche eine Querrichtung senkrecht zur Längsrichtung definiert, aufweist. Darüber hinaus weist die Vorrichtung mindestens ein Klemmelement auf, das mit dem Band verbunden ist und sich von dem Band im Wesentlichen entlang der Querrichtung erstreckt. Vorzugsweise weist die Vorrichtung 1, 2, 3, 4, 5, 6, 7, 8 oder 9 Klemmelemente auf.

Das Band besitzt vorzugsweise eine Breite von 7 mm, 10 mm, 12 mm, 15 mm oder 20 mm. Die Klemmelemente erstrecken sich von dem Band ausgehend in Querrichtung um die 1- bis 2-fache Breite des Bandes. Des weiteren weisen die Klemmelemente vorzugsweise eine Dicke von 1 bis 5 mm auf. Darüber hinaus besitzen die Klemmelemente vorzugsweise eine spitz zulaufende (dreieckige) Form, eine rechteckige Form oder eine halbrunde Form. Alternativ kann ein Band auch Klemmelemente mit verschiedenen Formen aufweisen.

In einer bevorzugten Ausführungsform erstreckt sich das mindestens eine Klemmelement unter einem definierten spitzen Winkel zur Querrichtung von dem Band.

In einer bevorzugten Ausführungsform sind das Band und das mindestens eine Klemmelement aus einem Stück gefertigt. In einer weiteren bevorzugten Ausführungsform ist das mindestens eine Klemmelement auf das Band aufgeklebt. In einer weiteren bevorzugten Ausführungsform ist das mindestens eine Klemmelement auf das Band genietet. In einer weiteren bevorzugten Ausführungsform ist das mindestens eine Klemmelement auf das Band geschweißt.

In einer weiteren bevorzugten Ausführungsform besitzt das mindestens eine Klemmelement eine aufgeraute Oberfläche.

In einer weiteren bevorzugten Ausführungsform ist das mindestens eine Klemmelement aus Federstahl gefertigt. In einer weiteren bevorzugten Ausführungsform ist das mindestens eine Klemmelement aus gehärtetem Edelstahl oder aus Edelstahl mit höherer Festigkeit gefertigt.

Die erfindungsgemäße Steckverbindung ist für Rohrsysteme sämtlicher Nennweiten, die für die Abgas- oder Lüftungsanlagen sowie Abluftanlagen gemäß technischer Auslegung / Berechnung erforderlich sind, anwendbar.

Anhand der Zeichnung wird die Erfindung nachstehend eingehend erläutert. Es zeigt:
- Fig. 1: eine erste Ausführungsform zweier erfindungsgemäß zusammengesteckter Rohrabschnitte;
- Fig. 2: eine Detailansicht des Einsteck- und Muffenteils aus Fig. 1;
- Fig. 3: einen Schnitt durch eine Detailansicht des Klemmelementes und Bandes zwischen dem Einsteck- und dem Muffenteil gemäß Fig. 2;
- Fig. 4a: eine Seitenansicht einer ersten Ausführungsform des Bandes mit den Klemmelementen;
- Fig. 4b: eine Seitenansicht einer zweiten Ausführungsform des Bandes mit den Klemmelementen;
- Fig. 4c: eine Seitenansicht einer dritten Ausführungsform des Bandes mit den Klemmelementen;
- Fig. 5a: eine Schrägansicht des Bandes mit den Klemmelementen gemäß Fig. 4a;
- Fig. 5b: eine Schrägansicht des Bandes mit den Klemmelementen gemäß Fig. 4b;
- Fig. 5c: eine Schrägansicht des Bandes mit den Klemmelementen gemäß Fig. 4c;

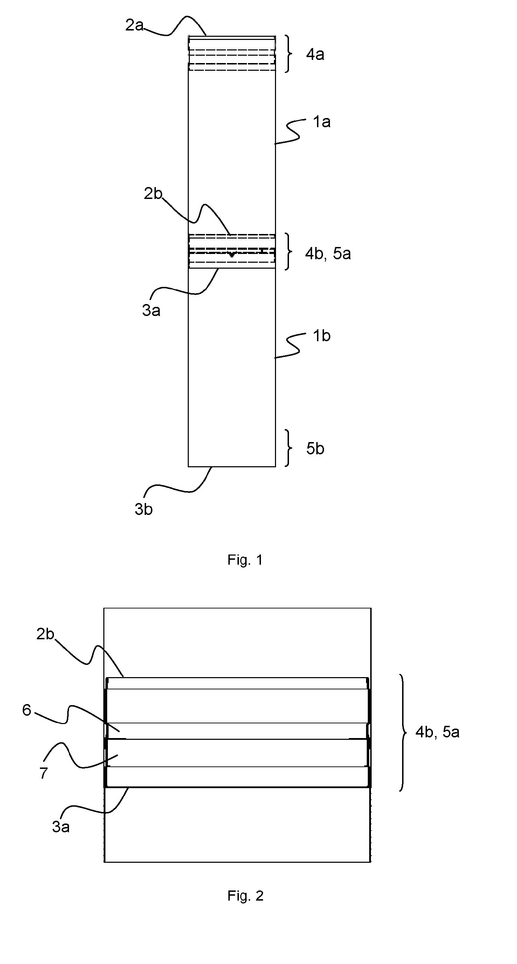

Aus der Darstellung gemäß Fig. 1 ist die Verbindung zweier Rohrabschnitte 1a, 1b mittels einer erfindungsgemäßen Vorrichtung zum Verbinden von Rohrabschnitten zu entnehmen. Dabei weist ein erster Rohrabschnitt 1a ein erstes Ende 2a und ein zweites Ende 3a auf, wobei das erste Ende 2a ein Einsteckteil 4a und das zweite Ende 3a ein Muffenteil 5a umfasst. Darüber hinaus weist ein zweiter Rohrabschnitt 1 b ein erstes Ende 2b und ein zweites Ende 3b auf, wobei das erste Ende 2b ein Einsteckteil 4b und das zweite Ende 3b ein Muffenteil 5b umfasst. Das Einsteckteil 4b des Rohrabschnitts 1 b steckt dabei in dem Muffenteil 5a des Rohrabschnitts 1a.

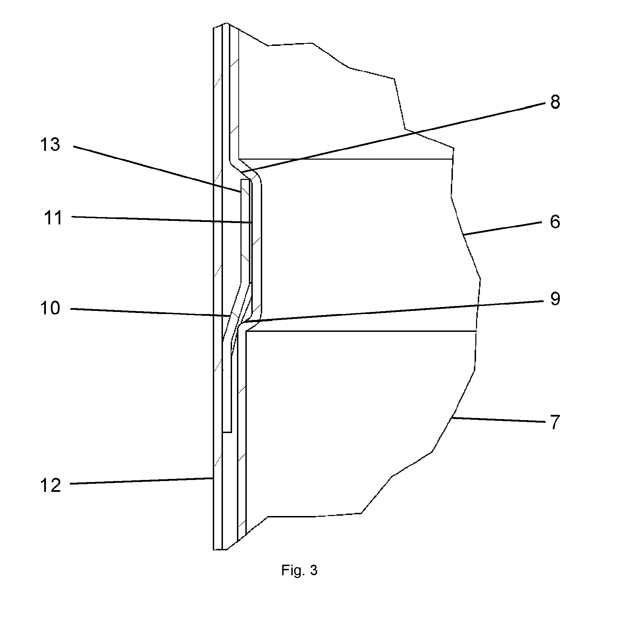

Den Darstellungen gemäß Fig. 2 und Fig. 3 sind Detailansichten der ersten Ausführungsform zu entnehmen, welche den Muffenteil 5a und den Einsteckteil 4b zweier Rohrabschnitte 1a, 1 b in eingestecktem Zustand schematisch zeigen. Dabei weist der Einsteckteil 4b einen ersten Bereich 6 und einen zweiten Bereich 7 auf, welche jeweils einen gegenüber dem Umfang des Einsteckteils reduzierten Durchmesser besitzen.

Der Einsteckteil 4b besitzt einen gegenüber dem Rohrumfang verminderten Durchmesser, der einen Spalt zwischen der äußeren Umfangsfläche des Einsteckteils 4b und der inneren Umfangsfläche 12 des Muffenteils 5a lässt, welcher es ermöglicht, dass das Einsteckteil gerade noch in das Muffenteil geschoben werden kann.

Der erste Bereich 6 besitzt einen gegenüber dem Rohrumfang verminderten Durchmesser, in welchem ein Band 13 und Teile von Klemmelementen 10 beherbergt sind. Dabei ist der Durchmesser des ersten Bereichs 6 kleiner als der Durchmesser des Einsteckteils 4.

Der zweite Bereich 7 besitzt einen gegenüber dem Rohrumfang verminderten Durchmesser, welcher eine Anordnung von Teilen der Klemmelemente 10 zwischen der äußeren Umfangsfläche des zweiten Bereichs 7 und der inneren Umfangsfläche 12 des Muffenteils ermöglicht. Dabei stehen die Oberflächen der Klemmelemente 10 mit der inneren Umfangsfläche des Muffenteils 12 in reibschlüssiger Verbindung. Der Durchmesser des zweiten Bereichs 7 ist kleiner als der Durchmesser des Einsteckteils 4, aber größer als der Durchmesser des ersten Bereichs 6.

Der Darstellung in Fig. 3 ist die Positionierung des Klemmelementes 10 zwischen dem Einsteckteil 4b und dem Muffenteil 5a zu entnehmen. Das Band 13 und die Klemmelemente 10 sind dabei aus einem Teil gefertigt. Das Band 13 sitzt auf der äußeren Umfangsfläche des ersten Bereichs 6. Aus dem Band 13 entspringt das Klemmelement 10, welches sich unter einem Winkel von 9° von der Rohrumfangsfläche wegstreckt. Dabei erstreckt sich das Klemmelement 10 weiter über eine innere Schulter 9 zwischen dem ersten und dem ersten und dem zweiten Bereich. Der letzte Teil des Klemmelementes 10 wird von dem Muffenteil 5a gebogen, so dass die Oberfläche des Klemmelementes 10 mit dem Muffenteil 5a eine reibschlüssige Verbindung eingeht.

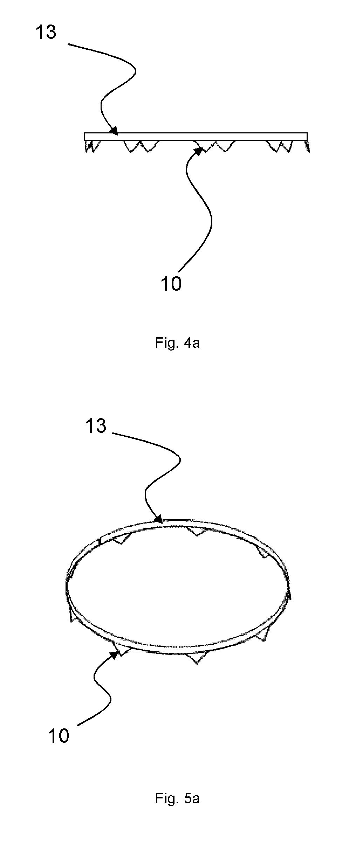

Aus den Darstellungen gemäß Fig. 4a und Fig. 5a ist der Aufbau einer ersten Ausführungsform des Bandes 13 mit samt den Klemmelementen 10 zu entnehmen. Neun Klemmelemente 10 sind in gleichen Abständen auf dem Band 13 angeordnet. Die Klemmelemente 10 weisen dabei eine dreieckige Form auf.

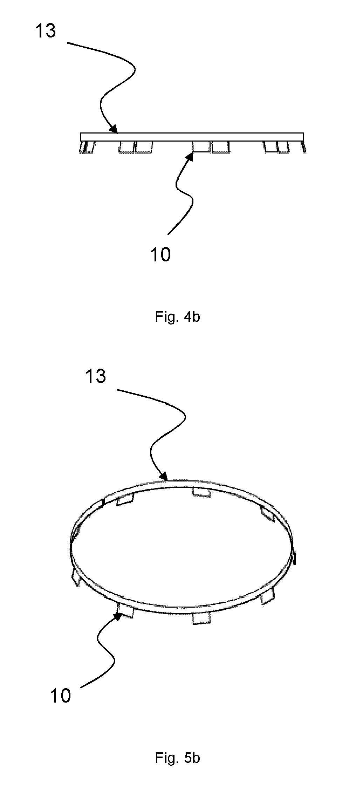

Aus den Darstellungen gemäß Fig. 4b und Fig. 5b ist der Aufbau einer ersten Ausführungsform des Bandes 13 mit samt den Klemmelementen 10 zu entnehmen. Neun Klemmelemente 10 sind in gleichen Abständen auf dem Band 13 angeordnet. Die Klemmelemente 10 weisen dabei eine rechteckige Form auf.

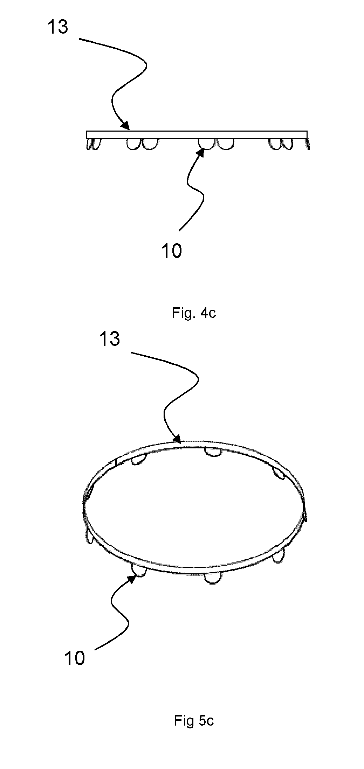

Aus den Darstellungen gemäß Fig. 4c und Fig. 5c ist der Aufbau einer ersten Ausführungsform des Bandes 13 mit samt den Klemmelementen 10 zu entnehmen. Neun Klemmelemente 10 sind in gleichen Abständen auf dem Band 13 angeordnet. Die Klemmelemente 10 weisen dabei eine halbrunde Form auf.

## Patentansprüche

1. Rohrabschnitt, der an einem ersten Ende (2a) einen Einsteckteil (4a) zum Einstecken in einen Muffenteil (5a) eines zweiten Endes (3a) eines zweiten Rohrabschnitts aufweist, wobei der Einsteckteil einen ersten Bereich mit einem reduzierten Durchmesser aufweist, in welchem mindestens ein Klemmelement zumindest teilweise sitzt, welches sich im Wesentlichen in Richtung des zweiten Endes (3a) erstreckt, **dadurch gekennzeichnet, dass** der erste Bereich (6) eine innere Schulter (9) aufweist, über welche sich das mindestens eine Klemmelement (10) erstreckt, sodass das mindestens eine Klemmelement (10) im ineinander gesteckten Zustand des Einsteckteils (4a) im Muffenteil (5a) des zweiten Rohrabschnitts über die innere Schulter (9) teilweise gebogen werden kann, sodass eine kraftschlüssige Verbindung zwischen dem Klemmelement und dem Muffenteil des zweiten Rohrabschnitts entstehen kann.

2. Rohrabschnitt nach Anspruch 1, **dadurch gekennzeichnet, dass** der erste Bereich (6) eine äußere Schulter (8) aufweist, über welche sich das mindestens eine Klemmelement (10) abstützt.

3. Rohrabschnitt nach einem der vorhergehenden Ansprüche, **dadurch gekennzeichnet, dass** das Klemmelement (10) zumindest teilweise unter einem definierten Winkel zur Wand des Rohrabschnitts im zweiten Bereich (7) verläuft.

4. Rohrabschnitt nach einem der vorhergehenden Ansprüche, **dadurch gekennzeichnet, dass** die Oberfläche des mindestens einen Klemmelements (10) aufgeraut ist.

5. Rohrabschnitt nach einem der vorhergehenden Ansprüche, **dadurch gekennzeichnet, dass** das mindestens eine Klemmelement (10) aus Federstahl, aus gehärtetem Edelstahl oder aus Edelstahl höherer Festigkeit gefertigt ist.

6. Rohrabschnitt nach einem der vorhergehenden Ansprüche, **dadurch gekennzeichnet, dass** das mindestens eine Klemmelement (10) mit einem Band (13) verbunden ist, welches auf der äußeren Umfangsfläche des zweiten Bereiches (7) angeordnet ist.

7. Rohrabschnitt nach einem der vorhergehenden Ansprüche, **dadurch gekennzeichnet, dass** das mindestens eine Klemmelement (10) mit einem Band (13) verbunden ist und sich von dem Band (13) im Wesentlichen entlang der Querrichtung erstreckt.

8. Rohrabschnitt nach einem der vorhergehenden Ansprüche, **dadurch gekennzeichnet, dass** sich das mindestens eine Klemmelement (10) unter einem definierten Winkel zur Querrichtung von dem Band (13) erstreckt.

9. Rohrabschnitt nach einem der vorhergehenden Ansprüche, **dadurch gekennzeichnet, dass** das mindestens eine Klemmelement (10) und das Band (13) aus einem Stück gefertigt sind.

10. Rohrabschnitt nach einem der vorhergehenden Ansprüche, **dadurch gekennzeichnet, dass** das mindestens eine Klemmelement (10) mit dem Band (13) fest verbunden ist, insbesondere auf das Band (13) aufgeklebt, genietet oder geschweißt ist.

11. Rohrabschnitt nach einem der vorhergehenden Ansprüche, **dadurch gekennzeichnet, dass** das Band (13) frei beweglich auf dem zweiten Bereich (7) angeordnet ist.

12. Rohrabschnitt nach einem der Ansprüche 1 bis 10, **dadurch gekennzeichnet, dass** das Band (13) mit dem ersten Bereich (6) fest verbunden ist, insbesondere auf den ersten Bereich (6) aufgeklebt, genietet oder geschweißt ist.

## Claims

1. A pipe section, which at a first end (2a) comprises an insertion part (4a) for insertion into a sleeve part (5a) of a second end (3a) of a second pipe section, wherein the insertion part comprises a first region with a reduced diameter, in which at least one clamping element is at least partly arranged, which substantially extends in the direction of the second end (3a), **characterized in that** the first region (6) has an inner shoulder (9), via which the at least one clamping element (10) extends, so that the at least one clamping element (10) in the fitted state of the insertion part (4a) can be partly bent over the inner shoulder (9) in the sleeve part (5a) of the second pipe section, so that a non-positive connection between the clamping element and the sleeve part of the second pipe section can develop.

2. The pipe section according to claim 1, **characterized in that** the first region (6) comprises an outer shoulder (8) via which the at least one clamping element (10) supports itself.

3. The pipe section according to any one of the preceding claims, **characterized in that** the clamping element (10) runs at least partly at a defined angle to the wall of the pipe section in the second region (7).

4. The pipe section according to any one of the preceding claims, **characterized in that** the surface of the at least one clamping element (10) is roughened.

5. The pipe section according to any one of the preceding claims, **characterized in that** the at least one clamping element (10) is produced from spring steel, from hardened stainless steel or from stainless steel of higher strength.

6. The pipe section according to any one of the preceding claims, **characterized in that** the at least one clamping element (10) is connected with a band (13), which is arranged on the outer circumferential surface of the second region (7).

7. The pipe section according to any one of the preceding claims, **characterized in that** the at least one clamping element (10) is connected to a band (13) and substantially extends from the band (13) along the transverse direction.

8. The pipe section according to any one of the preceding claims, **characterized in that** the at least one clamping element (10) extends at a defined angle to the transverse direction from the band (13).

9. The pipe section according to any one of the preceding claims, **characterized in that** the at least one clamping element (10) and the band (13) are produced from one piece.

10. The pipe section according to any one of the preceding claims, **characterized in that** the at least one clamping element (10) is connected to the band (13) in a fixed manner, in particular glued, riveted or welded to the band (13).

11. The pipe section according to any one of the preceding claims, **characterized in that** the band (13) is freely moveably arranged on the second region (7).

12. The pipe section according to any one of the claims 1 to 10, **characterized in that** the band (13) is connected to the first region (6) in a fixed manner, in particular glued, riveted or welded onto the first region (6).

## Revendications

1. Segment tubulaire qui présente à une première extrémité (2a) une pièce enfichable (4a) s'enfichant dans une partie manchon (5a) d'une seconde extrémité (3a) d'un second segment tubulaire, la pièce enfichable présentant une première zone à diamètre réduit dans laquelle est assis au moins partiellement au moins un élément de serrage qui s'étend sensiblement en direction de la seconde extrémité (3a), **caractérisé en ce que** la première zone (6) présente un épaulement intérieur (9) au-dessus duquel l'au moins un élément de serrage (10) s'étend de manière à ce qu'au moins un élément de serrage (10), en état enfiché de la pièce enfichable (4a), puisse être courbé partiellement dans la partie manchon (5a) du second segment tubulaire au-dessus de l'épaulement intérieur (9), de sorte qu'une liaison par correspondance mécanique peut être créée entre l'élément de serrage et la partie manchon du second segment tubulaire.

2. Segment tubulaire selon la revendication 1, **caractérisé en ce que** la première zone (6) présente un épaulement extérieur (8) sur lequel s'appuie l'au moins un élément de serrage (10).

3. Segment tubulaire selon une des revendications précédentes, **caractérisé en ce que** l'élément de serrage (10) s'étend du moins partiellement suivant un angle défini par rapport à la paroi du segment tubulaire dans la seconde zone (7).

4. Segment tubulaire selon une des revendications précédentes, **caractérisé en ce que** la surface de l'au moins un élément de serrage (10) est rugosifiée.

5. Segment tubulaire selon une des revendications précédentes, **caractérisé en ce que** l'au moins un élément de serrage (10) est fabriqué en acier à ressort, en inox durci ou en inox à haute résistance.

6. Segment tubulaire selon une des revendications précédentes, **caractérisé en ce que** l'au moins un élément de serrage (10) est relié à une bande (13) qui est disposée sur la surface circonférentielle extérieure de la seconde partie (7).

7. Segment tubulaire selon une des revendications précédentes, **caractérisé en ce que** l'au moins un élément de serrage (10) est relié à une bande (13) et s'étend depuis la bande (13) sensiblement en suivant le sens transversal.

8. Segment tubulaire selon une des revendications précédentes, **caractérisé en ce que** l'au moins un élément de serrage (10) s'étend suivant un angle défini par rapport au sens transversal depuis la bande (13).

9. Segment tubulaire selon une des revendications précédentes, **caractérisé en ce que** l'au moins un élément de serrage (10) et la bande (13) sont fabriqués en une seule pièce.

10. Segment tubulaire selon une des revendications précédentes, **caractérisé en ce que** l'au moins un élément de serrage (10) est relié fixement à la bande (13), en particulier collé, riveté ou soudé sur la bande (13).

11. Segment tubulaire selon une des revendications précédentes, **caractérisé en ce que** la bande (13) est disposée de manière à être librement mobile sur la seconde zone (7).

12. Segment tubulaire selon une des revendications 1 à 10, **caractérisé en ce que** la bande (13) est reliée fixement à la première zone (6), en particulier collée, rivetée ou soudée sur la première zone (6).
